# EUROPÄISCHE PATENTANMELDUNG

(11) **EP 2 977 863 A1**
(43) Veröffentlichungstag der Anmeldung: **27.01.2016**
(21) Anmeldenummer: 14178186.4
(22) Anmeldetag: 23.07.2014
(51) Int. Cl.: G06F 3/041

(54) **Touchscreen**

(71) Anmelder: Siemens Aktiengesellschaft, 80333 München (DE)
(72) Erfinder: Glaser, Maximilian, 91365 Weilersbach (DE); Singer, Marc, 91301 Forchheim (DE); Walders, Hanno, 91056 Erlangen (DE)

(57) **Zusammenfassung**

Bei einem in ein industrielles Automatisierungssystem eingebundenen elektronischen Gerät (1) soll eine sichere Bedienung durch einen Benutzer mittels eins Touchscreens (9) ermöglicht werden. Die Erfindung schlägt hierzu eine Überprüfung der Funktion des Touchscreens (9) mittels Referenzmarken (6,7) vor, durch die von Sensormitteln des Touchscreens (9) erfassbare Referenzwerte erzeugbar sind. Aus einem Vergleich zwischen Soll-Referenzwerten mit Ist-Referenzwerten kann die ordnungsgemäße Funktion des Touchscreens (9) überprüft werden.

## Beschreibung

Die Erfindung betrifft ein Touchscreen-System zum Bedienen eines elektronischen Gerätes durch einen Benutzer, umfassend einen Touchscreen mit Sensormitteln zum Erkennen einer Berührung des Touchscreens durch den Benutzer. Ferner betrifft die Erfindung ein elektronisches Gerät mit einem derartigen Touchscreen-System sowie ein Verfahren zum Betrieb eines derartigen Touchscreens-Systems.

In der Industrie werden für die Automatisierungs- und Antriebstechnik Steuerungs- und Regelungssysteme eingesetzt, z.B. zur Steuerung industrieller Prozesse oder Maschinen wie Produktionsmaschinen, Werkzeugmaschinen, Roboter etc. Zur Bedienung, Beobachtung und Inbetriebsetzung solcher Systeme bzw. Maschinen werden entsprechende Geräte wie Bedientafeln, Maschinensteuertafeln, Tastaturen und Handbediengeräte verwendet. In der Fachliteratur werden diese Geräte häufig als HMI (Human-Machine Interface) bezeichnet. Im Unterschied zur Consumer-Elektronik werden im Bereich der industriellen Automatisierungs- und Antriebstechnik erhöhte Sicherheitsanforderungen an die betreffenden Geräte gestellt. Zur Erhöhung der Sicherheit sind Eingabegeräte mit redundant ausgeführten Tastern und Schaltern bekannt. Insbesondere müssen bei bestimmten Eingabegeräten für eine sichere Eingabe mehrere Taster bzw. Schalter gleichzeitig bzw. in einer bestimmten Reihenfolge betätigt werden. Gewöhnliche Touchscreens werden derzeit für sichere Eingaben nicht verwendet.

Aufgabe der vorliegenden Erfindung ist es, die zuverlässige Funktion eines Touchscreens zu gewährleisten, so dass dieser auch in einer industriellen Umgebung zur Bedienung, Beobachtung oder Inbetriebsetzung eines System oder einer Maschine aus dem Bereich der industriellen Automatisierungs- und Antriebstechnik verwendet werden kann.

Diese Aufgabe wird bei einem Touchscreen-System zum Bedienen eines elektronischen Gerätes durch einen Benutzer, umfassend einen Touchscreen mit Sensormitteln zum Erkennen einer Berührung des Touchscreens durch den Benutzer, dadurch gelöst, dass das Touchscreen-System weiterhin wenigstens eine Referenzmarke zum Simulieren einer Berührung und zur Überprüfung der Funktion des Touchscreens während des Betriebs des elektronischen Gerätes umfasst.

Ferner wird diese Aufgabe gelöst durch ein Verfahren zum Betrieb eines Touchscreen-Systems zur Bedienung eines elektronischen Gerätes durch einen Benutzer mit folgenden Schritten:
- Vorgabe wenigstens eines Soll-Referenzwertes mittels wenigstens einer Referenzmarke zum Simulieren einer Berührung des Touchscreens,
- Bestimmen eines Ist-Referenzwertes durch ein Sensorsystem des Touchscreens,
- Vergleich der Differenz aus den Soll-Referenzwert und den Ist-Referenzwert mit einem Schwellenwert,
- Feststellen der ordnungsgemäßen Funktion des Touchscreens in Abhängigkeit des Vergleichsergebnisses.

Die Erfindung sieht die Verwendung von Referenzmarken vor, die Referenzsignale erzeugen, die vorzugsweise auf die Sensormittel des Touchscreens wirken wie durch die bestimmungsgemäße Betätigung des Touchscreens durch den Benutzer hervorgerufene Signale. Somit simulieren die Referenzmarken eine Berührung des Touchscreens durch einen Benutzer und ermöglichen eine Überprüfung der Funktion des Touchscreens während des Betriebs des elektronischen Gerätes.

Vorteilhaft sind die Referenzmarken entweder fest mit dem Touchscreen verbunden bzw. in diesen integriert oder sie sind derart in dem elektronischen Gerät angeordnet, welches den betreffenden Touchscreen umfasst, dass von den Referenzmarken erzeugte Referenzsignale durch die Sensormittel des betreffenden Touchscreen-Systems erfassbar sind.

Es kommt eine Vielzahl unterschiedlicher Typen von Referenzmarken in Betracht, die vorteilhaft an die Funktionsweise des jeweils verwendeten Touchscreens angepasst sind.

Resistive Touchscreens reagieren auf Druck. Referenzmarken für resistive Touchscreens üben an fest vorgegebenen bzw. vorgebbaren Stellen einen Druck auf den Touchscreen aus, der durch die entsprechenden Sensormittel des Touchscreens detektierbar ist. Dadurch lässt sich die ordnungsgemäße Funktion des Touchscreens mittels der Referenzmarken während des Betriebs des Touchscreens überprüfen. Die technische Realisierung derartiger Referenzmarken kann beispielsweise durch Piezo-Elemente erfolgen.

Induktive Touchscreens reagieren auf magnetische Felder. Entsprechende Referenzmarken in Bezug auf induktive Touchscreens erzeugen daher an fest vorgegebenen bzw. vorgebbaren Stellen des Touchscreens ein Magnetfeld, welches durch die Sensormittel des Touchscreens detektiert wird. Auch damit lässt sich die ordnungsgemäße Funktion des Touchscreens mittels der Referenzmarken während des Betriebs des Touchscreens überprüfen.

Kapazitive Touchscreens reagieren auf Kapazitätsänderungen infolge einer Berührung. In Bezug auf kapazitive Touchscreens verwendbare Referenzmarken beeinflussen die Kapazität aufgrund elektrischer Ladungen bzw. elektrischer Felder, wobei eine dadurch hervorgerufene Kapazitätsänderung durch die betreffenden Sensormittel detektierbar ist. Durch die an bestimmten Stellen des Touchscreens vorgegebenen bzw. vorgebbaren Referenzsignale lässt sich die ordnungsgemäße Funktion derartiger Touchscreens während des Betriebs des Touchscreens überprüfen.

Unabhängig von der Funktionsart des betreffenden Touchscreens lassen sich prinzipiell zwei Arten von Referenzmarken unterscheiden, nämlich statische Referenzmarken oder dynamische Referenzmarken. Eine statische Referenzmarke erzeugt an ihrer Position ständig ein Referenzsignal, das von dem Sensorsystem des Touchscreens detektierbar ist. Beispielsweise wird durch eine entsprechende Referenzmarke permanent ein bestimmter Druck auf eine bestimmte Stelle des Touchscreens ausgeübt. Mittels statischer induktiver bzw. statischer kapazitiver Referenzmarken wird jeweils an einer bestimmten Stelle des Touchscreens ein bestimmtes magnetisches bzw. elektrisches Feld erzeugt, welches zur Funktionsüberprüfung des Touchscreens von den Sensormitteln des Touchscreens detektiert wird.

Vorteilhaft werden jedoch dynamische Referenzmarken verwendet, die gegenüber statischen Referenzmarken den Vorteil haben, dass sie zu- bzw. abgeschaltet werden können. Vorteilhaft umfassen entsprechende Touchscreens einen Referenzmarken-Controller, mit dem die einzelnen Referenzmarken angesteuert werden können. Besonders vorteilhaft können die entsprechenden Referenzmarken nicht nur ein- bzw. ausgeschaltet, sondern auch in ihrer Signalstärke angepasst werden. Dadurch lässt sich die ordnungsgemäße Funktion des betreffenden Touchscreens noch genauer überprüfen. Außerdem ist durch die gleichzeitige Aktivierung mehrerer Referenzmarken auch die Multi-Touch-Funktion eines betreffenden Touchscreens überprüfbar.

So wie sich die Referenzmarken hinsichtlich ihrer Art bzw. Funktionsweise unterscheiden, so gibt es auch für die Anordnung der Referenzmarken in Bezug auf den Touchscreen eine Vielzahl an Möglichkeiten. Eine Ausführungsform der Erfindung sieht vor, dass der Touchscreen zum bestimmungsgemäßen Gebrauch einen von dem Benutzer berührbaren Bereich aufweist. Weiterhin ist der Touchscreen in einem Gehäuse verbaut und umfasst auch einen sensitiven Bereich, der dem Benutzer nicht zur Bedienung zugänglich ist und der sich beispielsweise durch eine entsprechende Konstruktion des Gehäuses hinter einer Randabdeckung des Touchscreens befindet. Vorteilhaft sind entsprechende Referenzmarken zwar auf der vorderen sensitiven Seite des Touchscreens angeordnet, jedoch ausschließlich in dem einem Bediener zur Bedienung nicht zugänglichen Randbereich. Die Referenzmarken sind dadurch für den Bediener auch nicht sichtbar. Nachteilig bei dieser Anordnung ist jedoch, dass nicht die gesamte sensitive Oberfläche des Touchscreens hinsichtlich ihrer ordnungsgemäßen Funktion überprüft werden kann, sondern lediglich der Randbereich. Es sei an dieser Stelle jedoch angemerkt, dass bei einer ordnungsgemäßen Funktion des Touchscreens im Randbereich nur in sehr seltenen Ausnahmefällen ein Fehler in dem vom Benutzer bedienbaren Zentralbereich des Touchscreens auftreten wird. In den meisten Fällen ist somit eine ausschließliche Überprüfung des Randbereichs völlig ausreichend.

Neben oder zusätzlich zu den Referenzmarken im Randbereich lassen sich aber auch Referenzmarken in dem von dem Benutzer betätigbaren Zentralbereich des Touchscreens anordnen. Beispielsweise lassen sich auf der Oberfläche des Touchscreens von einem Benutzer kaum wahrnehmbare Leitungen anordnen, mittels derer sich an bestimmten Stellen des Touchscreens elektrische bzw. magnetische Felder mit vorgebbarer Signalstärke erzeugen lassen. Ferner ist es auch möglich, dass Referenzmarken an der Rückseite des Touchscreens angeordnet werden, die somit ebenfalls für den Benutzer nicht sichtbar sind. Auch so lassen sich beispielsweise elektrische oder magnetische Felder erzeugen, die von den Sensormitteln des Touchscreens erfassbar sind. Umfasst ein erfindungsgemäßes Touchscreen-System auch ein Deckglas, so können Referenzmarken an der dem Bediener zugewandten Oberseite des Deckglases oder auch an dessen Unterseite bzw. zwischen Touchscreen und Deckglas angeordnet sein.

Die Erfindung wird nachfolgend anhand von Ausführungsbeispielen näher erläutert. Es zeigen:
- FIG 1: Verfahrensschritte zum Betrieb eines erfindungsgemäßen Touchscreens und
- FIG 2: ein elektronisches Gerät mit einem erfindungsgemäßen Touchscreen.

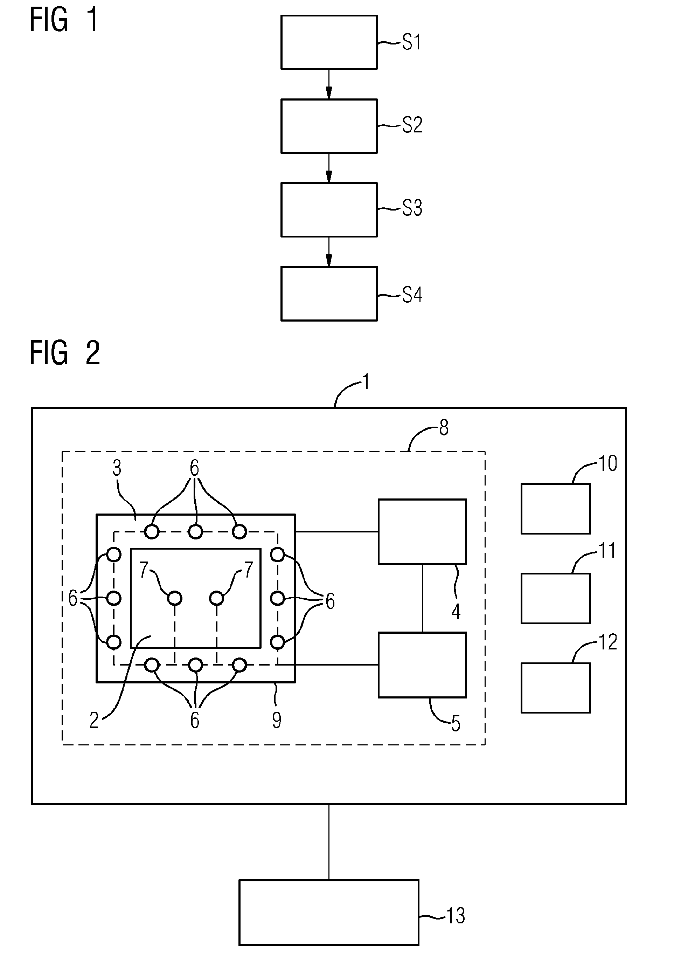

Figur 1 zeigt ein Ablaufdiagramm für ein Verfahren zum Betrieb eines erfindungsgemäßen Touchscreens. In einem Verfahrensschritt S1 werden von einem Referenzmarken-Controller während des Betriebs eines elektronischen Gerätes bestimmte Referenzmarken ausgewählt und dynamisch angesteuert. Dies bedeutet, dass der Referenzmarken-Controller gleichzeitig oder nacheinander eine bestimmte Anzahl der vorhandenen Referenzmarken aktiviert, so dass die als Aktoren wirkenden Referenzmarken an den Stellen der betreffenden Referenzmarken jeweils ein entsprechendes Referenzsignal erzeugen. Beispielsweise handelt es sich bei den Referenzmarken um Piezo-Elemente, die entsprechend ihres Aktivierungssignals an der betreffenden Stelle einen bestimmten Druck auf den Touchscreen ausüben. Alternativ oder zusätzlich können auch Referenzmarken vorhanden sein, die anstatt eines physikalischen Drucks ein elektrisches bzw. ein magnetisches Feld erzeugen, welches von dem Sensorsystem des betreffenden Touchscreens detektierbar ist. Abhängig von der im konkreten Ausführungsfall vorhandenen Technik wird somit durch die betreffenden Referenzmarken in dem Verfahrensschritt S1 für die jeweilige Referenzmarke ein Soll-Referenzwert vorgegeben und ein entsprechendes Referenzsignal erzeugt.

In einem nachfolgenden Verfahrensschritt S2 werden die von den Referenzmarken erzeugten Referenzsignale durch das Sensorsystem des Touchscreens erfasst. Die so erfassten Referenzwerte können als "Ist-Referenzwerte" bezeichnet werden.

Nachfolgend erfolgt in einem Verfahrensschritt S3 ein Vergleich der vorgegebenen Soll-Referenzwerte mit den gemessenen Ist-Referenzwerten. Dabei kann der Vergleich hinsichtlich der Position der erzeugten Referenzsignale mit den gemessenen Referenzsignalen erfolgen. Weiterhin kann auch der Absolutwert der Soll-Referenzwerte mit den gemessenen Ist-Referenzwerten verglichen werden. Vorteilhaft erfolgt jedoch in dem Verfahrensschritt S3 ein Vergleich der Soll-Referenzwerte mit den Ist-Referenzwerten sowohl hinsichtlich ihrer Position als auch hinsichtlich ihres Betrags. Dadurch wird eine umfassende Überprüfung der Funktionsfähigkeit des betreffenden Touchscreens gewährleistet.

Vorteilhaft wird nach der Funktionsüberprüfung eines betreffenden Touchscreens in einem Verfahrensschritt S4 ein entsprechender Funktions-Report erzeugt und beispielsweise in einer entsprechenden Datei gespeichert. Werden bei der Funktionsüberprüfung nicht tolerierbare Abweichungen zwischen den Soll- und den Ist-Referenzwerten erkannt, so werden vorzugsweise weitere Maßnahmen eingeleitet. Derartige Maßnahmen können eine von dem Benutzer wahrnehmbare Fehlermeldung, beispielsweise als Hinweistext auf dem Touchsreen, oder eine Außerbetriebsetzung des betreffenden Touchscreens bzw. des elektronischen Gerätes mit dem Touchscreen umfassen.

Figur 2 veranschaulicht in schematisierter Darstellung beispielhaft ein elektronisches Gerät 1 mit einem erfindungsgemäßen Touchscreen-System 8. Bei dem elektronischen Gerät 1 handelt es sich beispielsweise um ein so genanntes HMI-Gerät (Human-Machine-Interface) zum Bedienen und Beobachten von Geräten in einer industriellen Automatisierungsumgebung. Zur Bedienung des elektronischen Gerätes 1 umfasst dieses neben weiteren elektronischen Komponenten 10, 11 und 12 (Bedienelemente, Speicher, Prozessoren etc) das Touchscreen-System 8 mit einem von einem Benutzer betätigbaren Touchscreen 9. Gemäß einer bestimmten Ausführungsform der Erfindung ist der Touchscreen 9 in einen von dem Benutzer betätigbaren ersten Bereich 2 und einen von dem Benutzer nicht betätigbaren zweiten Bereich (Randbereich) 3 unterteilt. Der Randbereich 3 des Touchscreens 9 ist beispielsweise durch ein Gehäuse (nicht dargestellt) des elektronischen Gerätes 1 verdeckt. Gemäß der normalen Funktionsweise des Touchscreens 9 werden Berührungen des Benutzers in dem ersten Bereich 2 durch Sensormittel des Touchscreen-Systems 8 erfasst und ausgewertet. Hierfür umfassen die Sensormittel des Touchscreen-Systems 8 auch einen Touchscreen-Controller 4.

Gemäß der Erfindung weist das Touchscreen-System 8 neben dem Touchscreen 9 auch Referenzmarken 6, 7 auf, mittels derer sich die ordnungsgemäße Funktion des Touchscreens 9 überprüfen lässt. Die Referenzmarken 6 bzw. 7 können integraler Bestandteil des Touchscreen-Systems 8 oder separate Bauteile sein, die lediglich an der Oberfläche bzw. in unmittelbarer Umgebung zur Oberfläche des Touchscreens 9 angeordnet sind. In dem Ausführungsbeispiel gemäß Figur 2 befinden sich die Referenzmarken 6 in dem von dem Benutzer nicht betätigbaren Randbereich 3 des Touchscreens 9. Vorteilhaft befinden sich die Referenzmarken 6 zwischen dem Gehäuse des elektronischen Gerätes 1 und dem Touchscreen 9. Darüber hinaus sind bei dem elektronischen Gerät 1 gemäß dem Ausführungsbeispiel Referenzmarken 7 vorhanden, die sich innerhalb des von dem Benutzer betätigbaren ersten Bereichs 2 des Touchscreens 9 befinden. Damit die Referenzmarken 7 bei der Bedienung des elektronischen Gerätes 1 nicht irritieren, sind diese vorteilhaft durch derart feine Strukturen auf der Oberfläche des Touchscreens 9 ausgeführt, z.B. in Form dünner elektrischer Leiter, dass diese von dem Benutzer mit bloßem Auge praktisch nicht wahrnehmbar sind. Alternativ können sich die Referenzmarken 7 auch auf der dem Benutzer abgewandten Rückseite des Touchscreens 9 befinden.

Ein erfindungsgemäßes Touchscreen-System 8 kann ferner auch ein Deckglas (nicht dargestellt) umfassen. Dann können Referenzmarken an der dem Bediener zugewandten Oberseite des Deckglases oder auch an dessen Unterseite bzw. zwischen Touchscreen 9 und Deckglas angeordnet sein.

Vorteilhaft können die Referenzmarken 6, 7 während des Betriebs des elektronischen Gerätes 1 dynamisch angesteuert, d.h. aktiviert, deaktiviert und bezüglich des Soll-Referenzwerts, d.h. bezüglich des Betrags eines von ihnen jeweils erzeugten Referenzsignals, eingestellt werden. Zur individuellen Ansteuerung der Referenzmarken 6 bzw. 7 sind diese vorteilhaft mit einem Referenzmarken-Controller 5 verbunden, der ebenfalls Teil des erfindungsgemäßen Touchscreen-Systems 8 ist.

Die Funktionsüberprüfung des Touchscreens 9 des Touchscreen-Systems 8 gemäß dem Ausführungsbeispiel erfolgt nun dergestalt, dass der Referenzmarken-Controller 5 ausgewählte Referenzmarken der vorhandenen Referenzmarken 6, 7 aktiviert und damit an den betreffenden Stellen des Touchscreens 9 bestimmte Soll-Referenzwerte vorgibt. Aufgrund der Soll-Referenzwerte werden von dem Sensorsystem des Touchscreens 9 Sensorsignale erzeugt und an den Touchscreen-Controller 4 geliefert, der daraus Ist-Referenzwerte bestimmt. Diese Ist-Referenzwerte werden anschließend von dem Touchscreen-Controller 4 an den Referenzmarken-Controller 5 übermittelt. Anhand eines Vergleichs der ermittelten Soll-Referenzwerte mit den vorgegebenen Ist-Referenzwerten überprüft der Referenzmarken-Controller 5 die ordnungsgemäße Funktion des Touchscreens 9. Vorteilhaft wird das Ergebnis der Überprüfung in einen Speicher (nicht dargestellt) des elektronischen Gerätes 1 abgelegt, so dass zu einem späteren Zeitpunkt erneut darauf zurückgegriffen werden kann. Übersteigt die Differenz zwischen einem Soll-Referenzwert und dem dazu gehörigen Ist-Referenzwert eine vorbestimmte Schwelle, so erfolgt vorteilhaft unverzüglich eine entsprechende Mitteilung an den Benutzer, die vorzugsweise direkt auf dem Touchscreen 9 angezeigt wird. Weiterhin wird in diesem Fall die Bedienung eines mit dem elektronischen Gerät 1 verbundenen weiteren Gerätes 13, insbesondere einer Steuerung für eine Maschine der industriellen Automatisierungstechnik (Produktionsmaschine, Werkzeugmaschine, Roboter etc.) mittels des elektronischen Gerätes 1 unterbunden.

Die erfindungsgemäße Überprüfung der Funktionsfähigkeit des Touchscreens 9 erfolgt vorzugsweise direkt im Anschluss an die Inbetriebnahme des elektronischen Gerätes 1. Vorteilhaft erfolgt die Überprüfung jedoch auch fortlaufend während des laufenden Betriebs, beispielsweise in bestimmten, vorzugsweise vorgebbaren Zeitabständen. Darüber hinaus kann die Überprüfung auch durch bestimmte Zustände bzw. Ereignisse getriggert werden. Insbesondere kann die Funktionsüberprüfung auch manuell durch den Benutzer veranlasst werden.

Die Erfindung trägt dazu bei, dass die korrekte Funktion eines Touchscreens einfach und sicher überprüft werden kann und somit durch technische Mängel des Touchscreens hervorgerufene Fehlbedienungen im Bereich der industriellen Automatisierungstechnik vermieden werden.

## Patentansprüche

1. Touchscreen-System (8) zum Bedienen eines elektronischen Gerätes (1) durch einen Benutzer, umfassend einen Touchscreen (9) mit Sensormitteln zum Erkennen einer Berührung des Touchscreens (9) durch den Benutzer,
**gekennzeichnet durch** wenigstens eine Referenzmarke zum Simulieren einer Berührung und zur Überprüfung der Funktion des Touchscreens (9) während des Betriebs des elektronischen Gerätes (1).

2. Touchscreen-System (8) nach Anspruch 1, wobei die Sensormittel wenigstens einen kapazitiven Sensor zum Erfassen einer Kapazität und/oder Kapazitätsänderung infolge einer Berührung des Touchscreens (9) durch den Benutzer erfassen und wobei mittels der Referenzmarke(6, 7) eine bestimmte, durch die Sensormittel erfassbare Kapazität bzw. Kapazitätsänderung an einer bestimmten Stelle des Touchscreens (9) erzeugbar ist.

3. Touchscreen-System (8) nach Anspruch 1, wobei die Sensormittel einen induktiven Sensor zum Erfassen einer Induktivität und/oder Induktivitätsänderung infolge einer Berührung des Touchscreens (9) durch den Benutzer erfassen und wobei mittels der Referenzmarke (6, 7) eine bestimmte, durch die Sensormittel erfassbare Induktivität bzw. Induktivitätsänderung an einer bestimmten Stelle des Touchscreens (9) erzeugbar ist.

4. Touchscreen-System (8) nach Anspruch 1, wobei die Sensormittel einen Drucksensor zum Erfassen eines Drucks und/oder einer Druckänderung infolge einer Berührung des Touchscreens (9) durch den Benutzer erfassen und wobei mittels der Referenzmarke(6, 7) ein definierter, durch die Sensormittel erfassbarer Druck auf eine bestimmte Stelle des Touchscreens (9) ausübbar ist.

5. Touchscreen-System (8) nach einem der Ansprüche 1 bis 4, wobei eine Vielzahl von über den Touchscreen verteilten Referenzmarken (6, 7) vorhanden ist.

6. Touchscreen-System (8) nach einem der Ansprüche 1 bis 5, wobei die bzw. wenigstens eine Referenzmarke (6) in einem von dem Benutzer nicht einsehbaren Bereich, insbesondere unter einer Randabdeckung des Touchscreens (9), angeordnet ist.

7. Touchscreen-System (8) nach einem der Ansprüche 1 bis 6, wobei die bzw. wenigstens eine Referenzmarke (7) an der dem Benutzer abgewandten Rückseite des Touchscreens (9) angeordnet ist.

8. Elektronisches Gerät (1) mit einem Touchscreen-System (8) nach einem der Ansprüche 1 bis 7, umfassend eine Referenzmarken-Steuerung (5) zum Aktivieren bzw. Deaktivieren der Referenzmarke und/oder zum Einstellen eines bestimmten Referenzwertes.

9. Elektronisches Gerät (1) nach Anspruch 8, wobei die Referenzmarke (6, 7) zu bestimmten Zeitpunkten und/oder in bestimmten Zeitintervallen und/oder nach bestimmten Ereignissen aktivierbar ist.

10. Elektronisches Gerät (1) nach Anspruch 8 oder 9, ausgebildet als Bedieneinrichtung für ein Gerät der industriellen Automatisierungstechnik.

11. Verfahren zum Betrieb eines Touchscreen-Systems (8) zur Bedienung eines elektronischen Gerätes (1) durch einen Benutzer mit folgenden Schritten:
- Vorgabe wenigstens eines Soll-Referenzwertes mittels wenigstens einer Referenzmarke zum Simulieren einer Berührung des Touchscreens (9),
- Bestimmen eines Ist-Referenzwertes durch Sensormittel des Touchscreen-Systems (8),
- Vergleich der Differenz aus den Soll-Referenzwert und den Ist-Referenzwert mit einem Schwellenwert,
- Feststellen der ordnungsgemäßen Funktion des Touchscreens (9) in Abhängigkeit des Vergleichsergebnisses.

12. Verfahren nach Anspruch 11, wobei die Sensormittel wenigstens einen kapazitiven Sensor zum Erfassen einer Kapazität und/oder Kapazitätsänderung infolge einer Berührung des Touchscreens (9) durch den Benutzer erfassen und wobei mittels der Referenzmarke(6, 7) eine bestimmte, durch die Sensormittel erfassbare Kapazität bzw. Kapazitätsänderung an einer bestimmten Stelle des Touchscreens (9) erzeugt wird.

13. Verfahren nach Anspruch 11, wobei die Sensormittel einen induktiven Sensor zum Erfassen einer Induktivität und/oder Induktivitätsänderung infolge einer Berührung des Touchscreens (9) durch den Benutzer erfassen und wobei mittels der Referenzmarke(6, 7) eine bestimmte, durch die Sensormittel erfassbare Induktivität bzw. Induktivitätsänderung an einer bestimmten Stelle des Touchscreens (9) erzeugt wird.

14. Verfahren nach Anspruch 11, wobei die Sensormittel einen Drucksensor zum Erfassen eines Drucks und/oder einer Druckänderung infolge einer Berührung des Touchscreens (9) durch den Benutzer erfassen und wobei mittels der Referenzmarke(6, 7) ein definierter, durch die Sensormittel erfassbarer Druck auf eine bestimmte Stelle des Touchscreens (9) ausgeübt wird.
